# EUROPÄISCHE PATENTSCHRIFT

(11) **EP 1 847 177 B1**
(45) Veröffentlichungstag und Bekanntmachung des Hinweises auf die Patenterteilung: **30.07.2008**
(21) Anmeldenummer: 07001163.0
(22) Anmeldetag: 19.01.2007
(51) Int. Cl.: A22C 11/10

(54) **Zusatzüberspreitzung mit zweiter Zopflänge**
Additional overspread with a second casing length
Ecartement supplémentaire doté d'une seconde longueur de boyau

(30) Priorität: 21.04.2006 DE 102006018566; 21.04.2006 US 745315 P
(43) Veröffentlichungstag der Anmeldung: 24.10.2007
(73) Patentinhaber: Poly-clip System GmbH & Co. KG, 60489 Frankfurt am Main (DE)
(72) Erfinder: Waldstädt, Manfred, 55124 Mainz (DE); Zurwieden, Martin, 48336 Sassenberg (DE)
(74) Vertreter: Eisenführ, Speiser & Partner

(56) Entgegenhaltungen:
- DE-A1- 3 840 522
- DE-C1- 19 934 154
- DE-U1-6202005 007 17
- US-A- 4 675 945

## Beschreibung

Die vorliegende Erfindung betrifft eine Vorrichtung sowie ein Verfahren zum Ausbilden eines Zopfes an einem Verpackungshüllenmaterial, das ein Füllgut, insbesondere Wurstbrät, aufnimmt, gemäß den Oberbegriffen der Ansprüche 1 und 8.

Insbesondere betrifft die Erfindung eine Vorrichtung zum Ausbilden eines Zopfes an einem Verpackungshüllenmaterial, das ein Füllgut, insbesondere Wurstbrät, aufnimmt, wobei der Zopf wenigstens während seiner Ausbildung zumindest annährend füllgutfrei ist und wobei die Vorrichtung einen sich zumindest annährend linear erstreckenden Vorschubweg für das Verpackungshüllenmaterial, entlang dem Zopf ausgebildet wird, eine Vorratseinheit zur Aufnahme eines Vorrats an leerem Verpackungshüllenmaterial und eine erste Zopfbildungseinheit enthält, die in der Lage ist, in Richtung des Vorschubwegs zur Bildung einer ersten Zopflänge durch Abziehen von Verpackungshüllenmaterial aus dem Vorrat auf das Verpackungshüllenmaterial einzuwirken. Weiterhin betrifft die Erfindung ein Verfahren zum Ausbilden eines Zopfes an einem Verpackungshüllenmaterial, das ein Füllgut, insbesondere Wurstbrät, aufnimmt, wobei der Zopf wenigstens während seiner Ausbildung zumindest annährend füllgutfrei ist und wobei das Verfahren die folgenden Schritte enthält: Vorschieben eines aus einem Vorrat an leerem Verpäckungshüllenmaterial abgezogenen Verpackungshüllenmaterials entlang eines sich zumindest annährend linear erstreckenden Vorschubwegs für das Verpackungshüllenmaterial und Ausbilden einer ersten Zopflänge an dem Vorschubweg mittels einer ersten Zopfbildungseinheit. Dieses Verfahren dient insbesondere zum Betrieb der vorstehend erwähnten Vorrichtung.

Bei der Herstellung von Würsten und anderen Verpackungen mit Verpackungshüllen aus Folienmaterial, z.B. Kochschinken, ist es in vielen Fällen erwünscht, dass die Verpackung im verbrauchsfertigen Zustand einen anderen als den üblicherweise runden Querschnitt aufweist. Häufig ist ein viereckiger, zum Beispiel rechteckiger oder quadratischer Querschnitt erwünscht, beispielsweise als Belag für Toastbrot. Für solche etwa viereckigen Verpackungen wird die gefüllte Verpackungshülle nach dem Verschließen in einer entsprechenden Form zu ihrem endgültigen Querschnitt gepresst und hierin zum Beispiel durch Kochen stabilisiert. Da ein viereckiger Querschnitt einen größeren Umfang hat als ein runder Querschnitt darf eine solche Verpackungshülle nicht voll gefüllt sein. Die nicht auf das mögliche Aufnahmevolumen gefüllte, also schlaff gefüllte Verpackung muss aber im wesentlichen luftfrei sein, weil Lufteinschlüsse einen schädlichen Einfluss auf das Füllgut haben.

Zur Herstellung von nur schlaff gefüllten, im wesentlichen luftfrei verschlossenen Verpackungen sind verschiedene Verfahren bekannt (DE-A 22 54 943, DE-A 22 10 054, DE-A 20 54 441). Diese Verfahren haben jedoch alle gewisse Nachteile.

Um diese Nachteile zu vermeiden, sieht ein aus der europäischen Patentanmeldung 0 065 807 bekanntes Verfahren vor, das benötigte zusätzliche Hüllenmaterial für solche unvollständig gefüllten Verpackungen durch Nachziehen von ungefülltem Verpackungsmaterial dadurch zu ermöglichen, das auf die zunächst teilweise, aber prall gefüllte Verpackung Pressbacken einwirken. Dieses Verfahren eignet sich nur für pastöse Massen, die durch die Pressbacken verdrängt werden können. Bei z.B. nach diesem Verfahren locker gefüllten Verpackungen wird zur Bildung eines verlängerten, aber keineswegs massefreien Zopfes das Ende der Verpackung durch eine Öffnung entsprechender Größe gezogen, die auch durch die teilweise geöffneten Verdrängerscheren gebildet werden kann (DE-A-35 05 375).

Weiterhin geht aus dem deutschen Patent 38 40 522 ein Verfahren zum Ausbilden eines Zopfes an einer Wursthülle hervor, die ein Wurstbrät aufnimmt. Dieses Verfahren findet Anwendung bei einer Wurstclipmaschine, die weitestgehend einen üblichen Aufbau aufweist. Hierbei werden nach dem Füllen der Wursthülle mit dem Wurstbrät zwei Verdrängerscheren geschlossen, so dass sich ein Abschnitt der Wursthülle, welche das Wurstbrät aufnimmt, sowie ein leerer Abschnitt der Wursthülle ausbildet. Anschließend wird die Verdrängerschere, welche dem freien Ende der verschlossenen Wursthülle am nächsten ist, entlang des Vorschubwegs des Wursthüllenmaterials in der Weise verfahren, dass der mit dem Wurstbrät gefüllte Abschnitt der Wursthülle in Vorschubrichtung des Wursthüllenmaterials ebenfalls verschoben und gleichzeitig leeres Wursthüllenmaterial durch die zweite Ver-drängerschere nachgezogen wird. Das dabei nachgezogene, leere Wursthüllenmaterial bildet den gewünschten Zopf. Sobald die erforderliche Zopflänge erreicht ist, wird ein zweiter Clip an der von der ersten Verdrängerschere wegweisenden Seite der zweiten Verdrängerschere gesetzt und anschließend das Wursthüllenmaterial abgetrennt.

Bei diesem an sich bereits gut arbeitenden Verfahren erweist es sich als verbesserungswürdig, dass die Länge des erzeugbaren Zopfes durch den Verfahrweg der zweiten Verdrängerschere begrenzt ist. In Folge der linearen Verfahrbewegung wird insgesamt ein verhältnismäßig großer Platz für die Maschine beansprucht. Ist eine größerer Zopflänge notwendig, so kann diese bekannte Vorrichtung gegebenenfalls nicht ausreichend sein.

Es ist Aufgabe der vorliegenden Erfindung, eine Vorrichtung sowie ein Verfahren der eingangs genannten Art bereitzustellen, die eine Erhöhung der Zopflänge auf einfache Weise ermöglichen.

Die vorstehende Aufgabe wird hinsichtlich der Vorrichtung durch die Merkmale des Anspruchs 1 gelöst. In den sich daran anschließenden Ansprüchen 2 bis 7 finden sich vorteilhafte Ausgestaltungen hierzu.

Die zweite Zopfbildungseinheit, welche in der Lage ist, durch Abziehen von weiterem Verpackungshüllenmaterial aus dem Vorrat eine zweite Zopflänge zu erzeugen, erlaubt auf sehr einfache Weise, dass die Zopflänge vergrößerbar wird, ohne dass die erste Zopfbildungseinheit weiter verfahren werden muss. In Folge der hierdurch erreichten Aufspaltung der Zopfbildungsgesamtbewegung bzw. in der hierdurch eröffneten Zweistufigkeit der Zopfbildungsbewegung in eine erste und eine zweite Teilbewegung wird ermöglicht, dass der Bauraum der erfindungsgemäßen Vorrichtung trotz der im Vergleich zum Stand der Technik größeren Zopflänge gleich bleiben oder sogar verkürzt kann.

Um einen kompakten und platzsparenden Aufbau zu ermöglichen, kann weiterhin vorgesehen sein, dass die zweite Zopfbildungseinheit in der Lage ist, zum Erzeugen der zweiten Zopflänge quer zu dem Vorschubweg des Verpackungshüllenmaterials auf dieses zur Ausbildung einer Zopfschlaufe einzuwirken. Dabei kann die hierzu vorgesehene reversible Bewegung der zweiten Zopfbildüngseinheit bei ihrem Herausfahren aus einer Ausgangs- bzw. Bereitschaftsstellung in eine Arbeits- bzw. Zopfverlängerungsstellung linear sein oder die Zopfbildungseinheit kann dabei verschwenkt werden. Letzteres unterstützt wiederum einen sehr kompakten und Platz sparenden Aufbau der erfindungsgemäßen vorrichtung. Selbstverständlich kann auch vorgesehen werden, dass die zweite Zopfbildungseinheit während der Zopfbildungsbewegung aus der Bereitschaftsstellung in die Arbeits- bzw. Zopfverlängerungsstellung reversibel verschwenkt und vorzugsweise anschließend reversibel linear verfahren werden, um so eine kombinierte Bewegung zu erhalten.

Damit die zweite Zopflänge platzsparend ausgebildet werden kann, kann weiterhin vorgesehen werden, dass die zweite Zopfbildungseinheit mindestens einen Träger mit wenigstens einer Schlaufenbildungseinrichtung aufweist. Die Schlaufenbildungseinrichtung kann dabei mindestens ein Schlaufenbildungselement besitzen, das in der Lage ist, während der Zopfbildungsbewegung in Kontakt mit dem Zopf zu gelangen.

Um die Zopfschlaufe auszubilden, kann das Schlaufenbildungselement beispielsweise eine Drehbewegung ausführen. Je nach Länge der dabei gebildeten Schlaufe kann es dann notwendig sein, besondere Elemente vorzusehen, die ein Abziehen der Schlaufe von dem Schlaufenbildungselement erlaubt. Eine im Vergleich hierzu einfachere Lösung wird dadurch bereitgestellt, dass das Schlaufenbildungselement in der Lage ist, reversibel linear verfahren zu werden.

Um eine möglichst große Länge der Zopfschlaufe und damit eine möglichst große zweite Länge für den Zopf erzeugen zu können, ist es weiterhin vorteilhaft, wenn die Schlaufenbildungseinrichtung mehrere Schlaufenbildungselemente aufweist, die in der Lage sind, während der Zopfbildungsbewegung den Zopf zwischen sich aufzunehmen. Hierdurch wird bei der Schlaufenbildung eine definierter Weg für die Schlaufe bereitgestellt. Je nach Form der Schlaufe kann dabei die Zahl der Schlaufenbildungselemente gewählt werden. Selbstverständlich können auch an Stelle einer Schlaufenbildungseinrichtung mit mehreren Schlaufenbildungselementen mehrere Träger, insbesondere zwei Träger an der zweiten Zopfbildungseinheit vorgesehen sein, die wiederum mehrere Schlaufenbildungselemente tragen. Hinsichtlich der Zahl der Schlaufenbildungselemente ist zu bemerken, dass beispielsweise bei Ausbildung einer U-förmigen Schlaufe drei Schlaufenbildungselemente vorteilhaft sind, wobei bei einer Ausgestaltung der zweiten Zopfbildungseinheit mit beispielsweise zwei Trägern hiervon zwei Schlaufenbildungselemente an dem einen Träger und ein weiteres Schlaufenbildungselement an einem anderen Träger angeordnet sind. Letzterer kann dann wiederum linear verfahren werden, um die Basis bzw. den Scheitel der Schlaufe auszubilden. Wird dem gegenüber eine beispielsweise schwalbenschwanzförmige Schlaufe gewünscht, um so die Schlaufenlänge und damit die zweite Länge des Zopfes weiter zu vergrößern, kann wiederum bei einer Ausgestaltung der zweiten Zopfbildungseinheit mit beispielsweise zwei Trägern die Anordnung der Schlaufenbildungselemente so gebildet werden, dass zwei Schlaufenbildungselemente an dem einem Träger und zwei weitere Schlaufenbildungselemente an dem zweiten Träger, der hier wiederum linear verfahrbar ausgebildet sein kann, angebracht sein können. Diese Schlaufenbildungselemente an dem zweiten Träger lassen sich nach erreichen einer linearen Entverfahrposition des zweiten Trägers dann in eine Richtung zumindest annährend zu der Verfahrbewegung des zweiten Trägers auseinander spreizen, wodurch die Schwalbenschwanzform der Schlaufe erzeugbar ist.

Sind die Schlaufenbildungselemente in der Lage, in ihrer Position zueinander eingestellt zu werden, kann hierdurch eine Anpassung an unterschiedliche Durchmesser des Zopfs erreicht werden.

Weist die Schlaufenbildungseinrichtung drei Schlaufenbildungselemente auf, die in Form eines vorzugsweise gleichseitigen Dreiecks zueinander angeordnet sind, wobei die dreiecksförmige Anordnung insbesondere in der Weise erfolgt, dass bei Kontakt der Schlaufenbildungseinrichtung mit dem durch die erste Zopfbildungseinheit gebildeten Zopf das die Dreiecksspitze bildende Schlaufenbildungselement oberhalb des Zopfs und die die Dreiecksbasis bildenden Schlaufenbildungselemente unterhalb des Zopfs angeordnet sind, bilden die beiden die Dreiecksbasis definierenden Schlaufenbildungselemente die Umlenkpunkte für den Zopf, an denen er aus seiner zumindest annährend entlang des Vorschubwegs ausgebildeten, linear gestreckten Ausrichtung zur Ausbildung der Schlaufe umgelenkt wird. Grundsätzlich kann die Umlenkung um jeden beliebigen Winkel erfolgen, wobei eine Umlenkung um 90° die Möglichkeit eröffnet, auf kleinstem Raum die größte Schlaufenlänge auszubilden. Mit anderen Worten nehmen die Schlaufenbildungselemente bei dieser Ausgestaltung den Zopf, der mit der ersten Zopfbildungseinheit bereits gebildet worden ist, nach ihrem Kontakt mit diesem Zopf zwischen sich auf.

Damit die Schlaufenbildungseinrichtung sicher in Eingriff mit dem durch die erste Zopfbildungseinheit ausgebildeten Zopf gelangen kann, ist weiterhin vorgesehen, dass die Höhe des Dreiecks aus den drei Schlaufenbildungselementen so gewählt ist, dass sie größer als der Durchmesser des durch die erste Zopfbildungseinheit ausgebildeten Zopfs ist.

Kann das die Dreiecksspitze bildende Schlaufenbildungselement, d.h. das zwischen den beiden äußeren Schlaufenbildungselementen angeordnete Schlaufenbildungselement reversible linear verfahren werden, kann die Länge der Schlaufe bzw. deren Höhe, d.h. der Abstand zwischen dem Schlaufenscheitelpunkt und dem Vorschubweg, entlang sich der durch die erste Zopfbildungseinheit ausgebildete Zopf erstreckt, je nach gewünschter Anforderung beliebig erzeugt werden. Außerdem lässt sich hierdurch die Schlaufenbildung platzsparend bewirken.

Damit das Verpackungshüllenmaterial beim Ausbilden der Schlaufe und bei seinem Nachziehen ohne Beschädigung an dem wenigsten einen Schlaufenbildungselement entlang gleiten kann, ist weiterhin vorgesehen, dass das Schlaufenbildungselement reibungsarm ausgestaltet ist. Dies lässt sich auf unterschiedlichen Wegen erreichen, beispielsweise dadurch, dass das Schlaufenbildungselement drehbar an dem Träger angebracht ist und/oder dass das Schlaufenbildungselement an seiner Außenseite zumindest abschnittsweise mit einer reibungsarmen Oberfläche versehen ist.

Für das Schlaufenbildungselement können die unterschiedlichsten Ausgestaltungen vorgesehen werden. Eine besonders einfache Möglichkeit besteht darin, dass das Schlaufenbildungselement durch eine Rolle gebildet ist.

Grundsätzlich kann die zweite Zopfbildungseinheit nach Abschluss der Zopfbildungsbewegung der ersten Zopfbildungseinheit ihre Zopfbildungsbewegung beginnen. Dabei kann die Abfolge der Vorgänge bzw. Bewegungen durch eine Steuer- bzw. Regeleinrichtung, insbesondere eine programmgesteuerte Steuer- bzw. Regeleinrichtung, überwacht und gesteuert werden. Ebenso ist es möglich, dass die zweite Zopfbildungseinheit ihren Betrieb bzw. ihre Bewegung beginnt, wenn die Zopfbildung durch die erste Zopfbildungseinheit noch nicht abgeschlossen ist. Dabei kann die Abfolge der Vorgänge bzw. Bewegungen wiederum durch eine Steuer- bzw. Regeleinrichtung, insbesondere eine programmgesteuerte Steuer- bzw. Regeleinrichtung, überwacht und gesteuert werden. Alternativ oder ergänzend hierzu kann weiterhin vorgesehene sein, dass wenigstens eine Sensoreinrichtung zum Überwachen des Bewegungsablaufs von zumindest der ersten Zopfbildungseinheit angeordnet ist. Dabei kann die Sensoreinrichtung beispielsweise auf optischer, elektrischer oder mechanischer Basis arbeiten.

Für die erste Zopfbildungseinheit können wiederum die unterschiedlichsten Einrichtungen verwendet werden. Wird die erfindungsgemäße Vorrichtung beispielsweise bei einer Clipmaschine eingesetzt, so kann die erste Zopfbildungseinheit durch eine Füllgut-Verdrängereinrichtung gebildet sein, die mindestens eine erste und eine zweite Verdrängereinheit aufweist, wobei wenigstens die zweite Verdrängereinheit zumindest annährend in Vorschubrichtung des Verpackungshüllenmaterials zur Ausbildung der ersten Zopflänge reversibel verfahrbar sein kann. Für die Verdrängereinheiten können wiederum die unterschiedlichsten Lösungen Verwendung finden. So besteht die Möglichkeit, dass wenigstens eine der Verdrängereinheiten durch einen Scherenverdränger gebildet ist. Ebenso besteht die Möglichkeit, dass die erste und/oder die zweite Verdrängereinheit jeweils durch einen Irisverdränger gebildet sind.

Damit das von dem Verpackungshüllenmaterial aufgenommene Füllgut bei der weiteren Verarbeitung sicher in diesem verbleibt, kann weiterhin eine Verschlussmittel-Setzeinheit vorgesehen sein, die in der Lage ist, Verschlussmittel, insbesondere Clips, zum Verschließen des Verpackungshüllenmaterials zur Ausbildung von Füllgutprodukten zu setzen.

Um das mit dem Füllgut befüllte und mit dem Zopf ausgebildete Verpackungshüllenmaterial als eigenständiges Produkt zu erhalten, kann darüber hinaus eine Trenneinheit vorgesehen sein, die in der Lage ist, Abschnitte des Verpackungshüllenmaterials von dem Vorrat an Verpackungshüllenmaterial zur Ausbildung von Füllgutprodukten abzutrennen.

Für die Befüllung des Verpackungshüllenmaterials kann weiterhin eine Fülleinheit, vorzugsweise ein Füllrohr vorgesehen sein, das in der Lage ist, Füllgut in das Verpackungshüllenmaterial einzubringen. Hierbei kann der Vorrat an leerem Verpackungshüllenmaterial an der Fülleinheit angeordnet sein. Wird die Fülleinheit beispielsweise durch ein Füllrohr gebildet, so kann das Verpackungshüllenmaterial an der Außenumfangsseite des Füllrohres angeordnet sein. Dann wird die Vorratseinheit durch den Vorrat an Verpackungshüllenmaterial sowie der Außenumfangsseite des Füllrohres gebildet.

Hinsichtlich des Verfahrens wird die vorstehende Aufgabe durch die Merkmale des Anspruchs 8 gelöst. In den sich daran anschließenden Ansprüchen 9 bis 11 finden sich vorteilhafte Ausgestaltungen hierzu. Für das Verfahren gelten neben den nachstehend noch aufgeführten Vorteilen die gleichen, wie sie vorstehend für die Vorrichtung erläutert worden sind.

Wie bereits vorstehend erwähnt, kann die Ausbildung der zweiten Zopflänge begonnen werden, bevor die Ausbildung der ersten Zopflänge abgeschlossen ist. Ebenso besteht die Möglichkeit, dass die Ausbildung der zweiten Zopflänge begonnen wird, nachdem zumindest die Hälfte der ersten Zopflänge gebildet worden ist. Des weiteren kann die Ausbildung der zweiten Zopflänge nach Ausbildung der ersten Zopflänge begonnen werden.

Dabei kann der Beginn der Bewegung der zweiten Zopfbildungseinheit durch eine die Bewegung der ersten Zopfbildungseinheit überwachenden Sensoreinrichtung gesteuert werden.

Weiterhin kann vorgesehen sein, dass zur Ausbildung der zweiten Zopflänge an dem durch die erste Zopfbildungseinheit ausgebildeten ersten Zopflänge eine Zopfschlaufe gebildet wird.

Hierbei kann zur Ausbildung der Zopfschlaufe eine Schlaufenbildungseinrichtung an einen Abschnitt der durch die erste Zopfbildungseinheit ausgebildeten ersten Zopflänge reversibel heranbewegt, insbesondere herangeschwenkt werden und anschließend mindestens ein Schlaufenbildungselement der Schlaufenbildungseinrichtung reversibel linear verfahren werden.

Weiterhin besteht die Möglichkeit, dass zur Ausbildung der ersten Zopflänge ein in Richtung des Vorschubwegs weisendes Ende des Verpackungshüllenmaterials durch mindestens ein erstes Verschlussmittel, insbesondere einem Verschlusschip, füllgutdicht verschlossen wird, anschließend Füllgut in die Verpackungshülle eingefüllt wird, daraufhin ein Abschnitt des mit Füllgut gefüllten Verpackungshüllenmaterials von dem noch leeren Verpackungshüllenmaterial mittels einer Füllgut-Verdrängereinrichtung mit wenigstens einer ersten und einer zweiten Verdrängereinheit abgeteilt wird und anschließend die erste Verdrängereinheit entlang des Vorschubwegs unter Mitnahme des mit Füllgut gefüllten Abschnitts des Verpackungshüllenmaterials unter gleichzeitigem Abziehen von noch leerem Verpackungshüllenmaterial verfahren wird.

Des Weiteren kann vorgesehen sein, dass nach Ausbildung der zweiten Zopflänge mindestens ein zweites Verschlussmittel, insbesondere ein Verschlussclips, zum füllgutdichten Verschließen des Verpackungshüllenmaterials gesetzt wird und die Verpackungshülle im Bereich der entgegen der Vorschubrichtung des Verpackungshüllenmaterials weisenden Seite des Verschlussmittels zur Ausbildung eines Füllgutprodukts abgetrennt wird.

Weitere vorteilhafte Ausgestaltungen sowie ein Ausführungsbeispiel der erfindungsgemäßen Vorrichtung bzw. des erfindungsgemäßen Verfahrens werden nachstehend in Verbindung mit den beigefügten Zeichnungsfiguren erläutert. Die während dieser Beschreibung verwendeten Begriffe "links", "rechts"; "oben" und "unten" beziehen sich auf die Zeichnungsfiguren in einer Ausrichtung mit normal lesbaren Bezugszeichen bzw. Figurenbezeichnungen. Hierbei ist:
- Fig. 1 bis 8: schematische Seitenansichten, die die erfindungsgemäße Vorrichtung sowie das erfindungsgemäße Verfahren während verschiedener Arbeitsschritte wiedergeben;
- Fig. 9 und 10: eine Ansicht entlang der Linie IX-IX in Fig. 1.

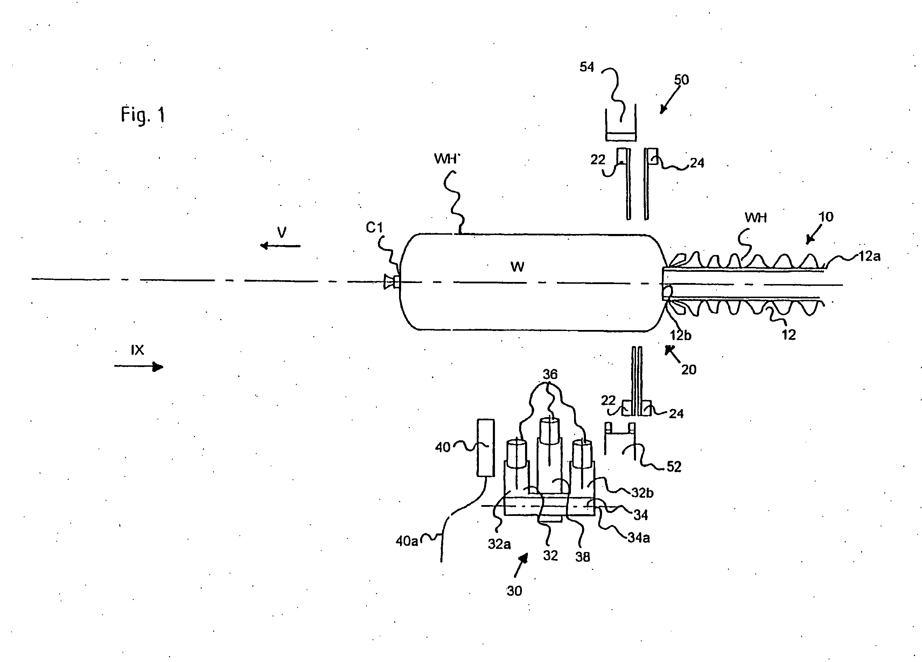

In den Fig. 1 bis 10 ist die erfindungsgemäße Vorrichtung schematisch wiedergegeben, wobei anzumerken ist, dass nur die für das Verständnis der Erfindung notwendigsten Bauteile gezeigt sind. Wie aus den genannten Figuren ersichtlich ist, wird die erfindungsgemäße Vorrichtung bei einer Wurstclipmaschine zur Herstellung von Wurstprodukten W eingesetzt.

Die erfindungsgemäße Vorrichtung weist zunächst eine Vorratseinheit 10 zur Aufnahme eines leeren Verpackungshüllenmaterials auf, welches im vorliegenden Ausführungsbeispiel durch ein flexibles Wursthüllenmaterial WH gebildet ist. Die Vorratseinheit 10 wird durch die Außenumfangsfläche 12a eines Füllrohrs 12 mit im Wesentlichen kreisringzylindrischen Querschnitt sowie das auf dieser Seite 12a angeordneten leeren Wursthüllenmaterials WH gebildet. Das Wursthüllenmaterial WH ist auf der Außenumfangsfläche 12a ziehharmonikaartig aufgeschoben, wie dies aus Fig. 1 hervorgeht. Das Füllrohr 12 besitzt außerdem eine nach links weisende Mündungsöffnung 12b, aus der das nicht näher bezeichnete Füllgut - hier Wurstbrät - in die Wursthülle WH eingefüllt werden kann.

Das Wursthüllenmaterial bzw. die Wursthülle WH ist von dem Füllrohr 12 weg entlang eines sich im Wesentlichen linear und in Fig. 1 horizontal erstreckenden Vorschubwegs, der in Fig. 1 durch den Pfeil V gekennzeichnet ist, nach links durch den Fülldruck des in die leere Wursthülle WH eintretenden Füllguts vorschiebbar. Das dabei entstehende Wurstprodukt W bzw. der mit Füllgut gefüllte Abschnitt WH' der Wursthülle WH kann dabei auf einer nicht weiter dargestellten Ablage, wie beispielsweise einem Förderband, aufliegen.

Die erfindungsgemäße Vorrichtung enthält weiterhin eine erste Zopfbildungseinheit 20, die durch eine Füllgut-Verdrängereinrichtung gebildet ist. Die Füllgut-Verdrängereinrichtung 20 weist einen ersten Irisverdränger 22 und einen an dem Vorschubweg V rechts von dem ersten Irisverdränger 22 angeordneten zweiten Irisverdränger 24 auf. Wie dies nachstehend noch näher erläutert wird, ist der erste Irisverdränger 22 aus einer Ausgangsstellung während einer Zopfbildungsbewegung für die erste Länge des Zopfes Z entlang des Vorschubwegs V für die Wursthülle WH bzw. entlang eines Zopfbildungswegs in eine Arbeits- bzw. Zopfbildungs-Endstellung reversibel linear verfahrbar.

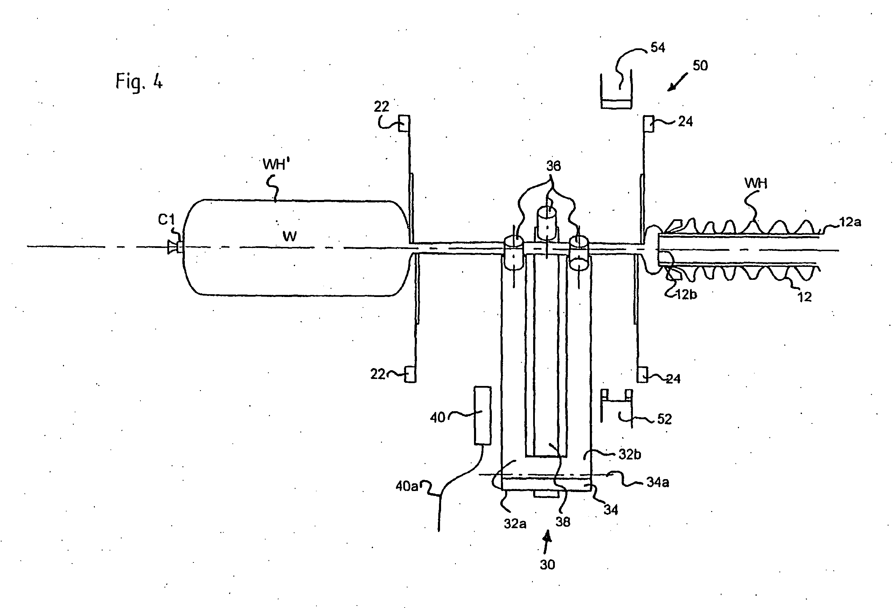

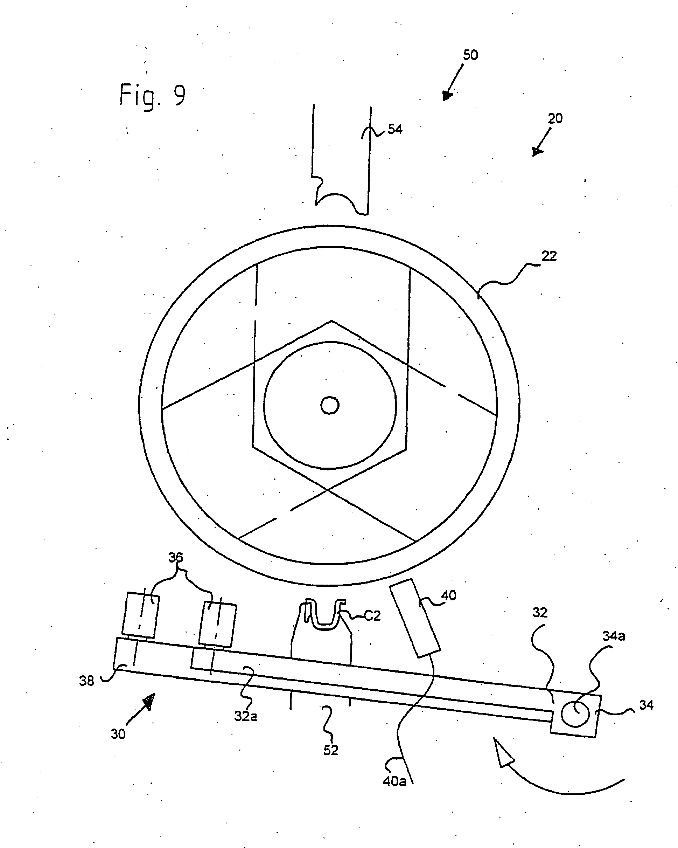

Neben der ersten Zopfbildungseinheit 20 ist noch eine zweite Zopfbildungseinheit 30 vorgesehen, die sich, wie in den Fig. 1 und 9 gezeigt, in ihrer Ausgangsstellung unterhalb des Zopfbildungs- bzw. Vorschubwegs V befindet. Die zweite Zopfbildungseinheit 30 weist eine nicht näher bezeichnete Schlaufenbildungseinrichtung mit einem ersten Träger 32 auf, der in der Draufsicht die Form des Buchstabens "U" besitzt, dessen beide parallel zueinander verlaufenden Schenkel mit 32a, 32b bezeichnet sind. Der erste Träger 32 ist über die beiden in Fig. 4 erkennbaren Schenkel 32a, 32b des Buchstabens "U" mit einer Schwenkeinrichtung 34 zum Ausführen einer Schwenkbewegung verbunden.

An den beiden freien Enden der U-Schenkel 32a, 32b ist jeweils eine Umlenkrolle 36 drehbar angeordnet. Die Umlenkrollen 36 sind so an den U-Schenkeln 32a, 32b angebracht, dass sie in der in den Fig. 1 und 9 gezeigten Ausgangsstellung der zweiten Zopfbildungseinheit 30 in Richtung des Vorschubwegs V weisen. An ihren zylindrischen Außenumfangsflächen können die Umlenkrollen 36 mit einem reibungsarmen Material beschichtet sein.

Neben dem ersten Träger 32 ist darüber hinaus bei der zweiten Zopfbildungseinheit 30 als Teil der Schlaufenbildungseinrichtung ein zweiter Träger 38 vorgesehen, der in der Draufsicht zumindest annährend eine Rechteckform besitzt und der zwischen den beiden U-Schenkeln 32a, 32b des ersten Trägers 32 angeordnet ist. Der zweite Träger 38 ist ebenfalls mit der Schwenkeinrichtung 34 zum Ausführen einer Schwenkbewegung verbunden. Darüber hinaus ist der zweite Träger 38 an seinem der Schwenkeinrichtung 34 gegenüberliegenden Ende ebenfalls mit einer drehbaren Umlenkrolle 36 versehen, die die gleiche Ausrichtung sowie die gleiche Ausgestaltung wie die beiden Umlenkrollen 36 an den U-Schenkeln 32a, 32b des ersten Trägers 32 aufweist.

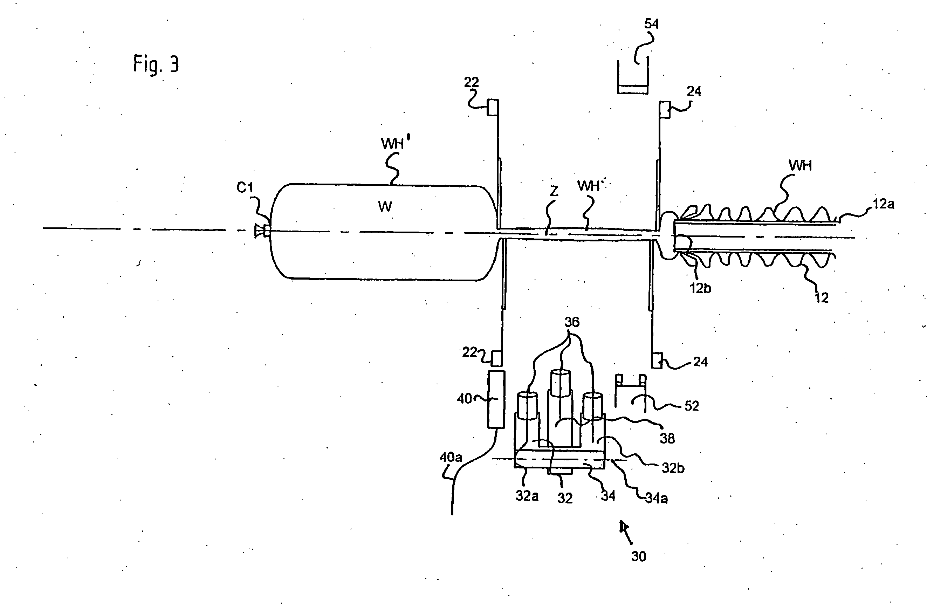

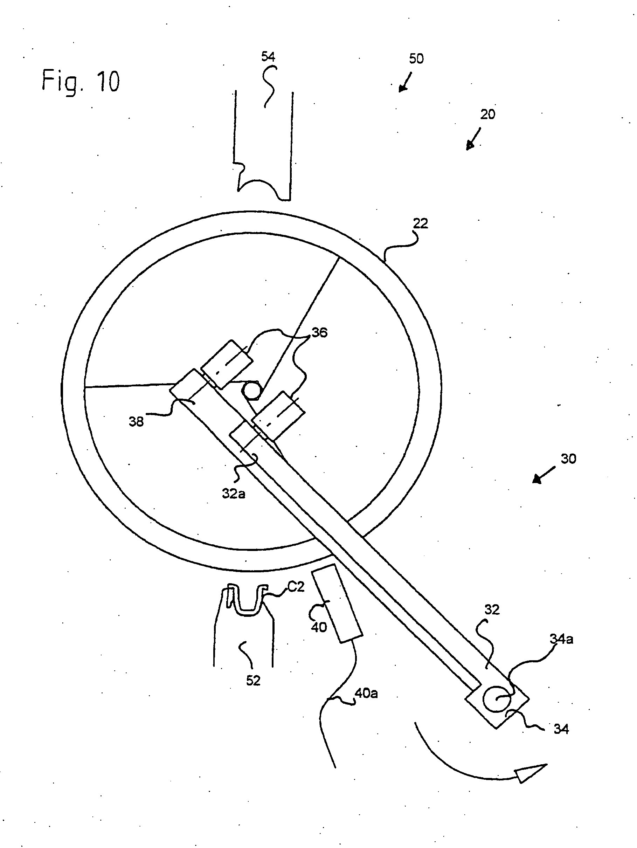

Wie beispielsweise aus Fig. 1 oder Fig. 4 entnehmbar ist, spannen die drei Umlenkrollen 36 ein gleichseitiges Dreieck auf, wobei die an dem zweiten Träger 38 vorgesehene Umlenkrolle 36 die Dreiecksspitze und die beiden an den U-Schenkeln 32a, 32b des ersten Trägers 32 vorgesehenen Umlenkrollen 36 die Basis des Dreiecks bilden. Die Dreieckshöhe, d.h. der Abstand der die Dreiecksspitze bildenden Umlenkrolle 36 an dem zweiten Träger 38 zu der von den beiden Umlenkrollen 36 des ersten Trägers 32 definierten Grundlinie des Dreiecks ist dabei so bemessen bzw. ist ggf. so einstellbar, dass der durch die erste Zopfbildungseinheit 20 gebildete Zopf (vgl. Fig. 3 o. 4) zwischen den Umlenkrollen 36 aufnehmbar ist, wenn die zweite Zopfbildungseinheit 32 ihre Zopfbildungsstellung durch reversibles Verschwenken aus der Ausgangsstellung eingenommen hat, wie dies in Fig. 4 und 10 gezeigt ist.

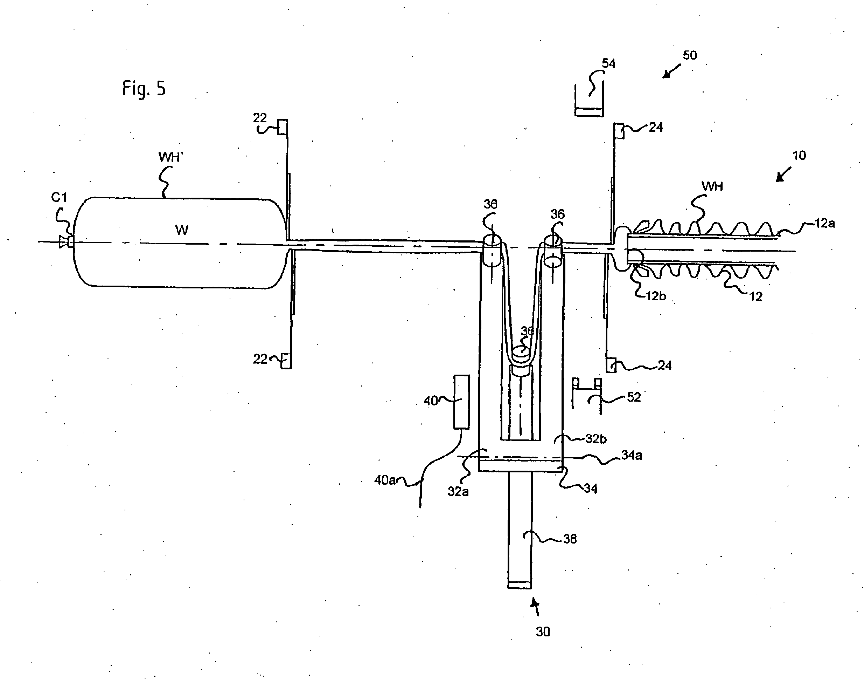

Weiterhin ist der zweite Träger 38 mit einer nicht weiter dargestellten Verfahreinrichtung zum Ausführen einer reversiblen Linearbewegung verbunden. Damit kann der zweite Träger 38 aus der in Fig. 1 gezeigten Ausgangsstellung in eine nachstehend noch näher erläuterte Schlaufenbildungsstellung, die in Fig. 5 wiedergegeben ist, in eine Richtung im Wesentlichen senkrecht zu dem Vorschubweg V bzw. senkrecht zu den durch die erste Zopfbildungseinheit 20 gebildeten Zopf Z reversibel verfahren werden. Bei seiner linearen Verfahrbewegung kann der zweite Träger 38 an den nicht näher bezeichneten Innenseiten der Schenkel 32a, 32b des ersten Trägers 32 geführt sein.

Von der Schwenkeinrichtung 34 ist lediglich deren Drehachse 34a gezeigt ist, die sich zumindest annährend horizontal und parallel zu dem Vorschubweg V des Wursthüllenmaterials WH erstreckt. Um die Drehachse 34a kann mittels der Schwenkeinrichtung 34, die einen nicht näher dargestellten Motor besitzt, der erste und der zweite Träger 32, 38 simultan aus der in den Fig. 1 und 9 gezeigten Ausgangsstellung in der Ebene der Fig. 9 und 10 in die in den Fig. 4 und 10 gezeigte Arbeitsstellung reversibel verschwenkt werden. Anschließend, oder kurz davor, kann der zweite Träger 38 seine lineare Verfahrbewegung beginnen, wie dies nachstehend noch näher geschildert wird.

Links neben der zweiten Zopfbildungseinheit 30 ist ein. Sensor 40 vorgesehen, der über eine Kabelverbindung 40a mit einer nicht näher dargestellten Steuerund Regeleinrichtung verbunden ist. Der Sensor 40 dient dazu, die Bewegung der ersten Zopfbildungseinheit 20, insbesondere das vollständige Vorbeifahren des mit Füllgut gefüllten Abschnitts WH' des Wurstprodukts W zu erfassen. Je nach dem gewählten Steuer- bzw. Regelungsablauf kann die Schwenkbewegung der zweiten Zopfbildungseinheit 30 bereits vor dem vollständigen Vorbeifahren des mit Füllgut gefüllten Abschnitts WH' der Wursthülle WH beginnen. Ebenso ist aber auch der Beginn dieser Schwenkbewegung nach dem vollständigen Vorbeifahren des Abschnitts WH' denkbar.

Die erfindungsgemäße Vorrichtung weist schließlich noch eine Clipsetzeinheit 50 auf, die aus einer Matrize 52 und einem Stempel 54 besteht. Die Clipsetzeinheit 50 ist in der Lage, Verschlussmittel in Form von Clips C1, C2, C3 zum füllgutdichten Verschließen der Stirnseiten der Wursthülle WH eines Wurstprodukts W zu setzen (vgl. Fig. 1 u. 7). Weiterhin ist die Clipsetzeinheit 50 mit einem eine Trenneinheit bildenden Trennmesser 56 versehen, welches zum Durchtrennen der Wursthülle WH in der nachstehend beschriebenen Weise dient. Die Clipsetzeinheit 50 ist dabei so angeordnet, dass sie bei auseinandergefahrenen Irisverdrängern 22, 24 in den so gebildeten Zwischenraum zum Setzen der Clips C1, C2, C3 einfahren kann.

Die Arbeitsweise der erfindungsgemäßen Vorrichtung bzw. des erfindungsgemäßen Verfahrens ist wie folgt:
Bevor ein neues Wurstprodukt W mit Wurstbrät befüllt werden kann, wird mittels der Clipsetzeinheit 50 an dem nach links weisenden, freien Ende der leeren Wursthülle WH ein Clip C1 gesetzt. Dieser Clip C1 verschließt die Wursthülle WH füllgutdicht, so dass anschließend der Füllvorgang begonnen werden kann. Hierzu wird das Wurstbrät durch das Füllrohr 12 zu der Füllrohrmündung 12b gefördert. Während des Füllvorganges wird infolge des dabei in die Wursthülle WH eintretenden Füllgutes und des hierdurch entstehenden Druckes innerhalb der Wursthülle WH das Wursthüllenmaterial WH nach links verschoben, wobei gleichzeitig leere Wursthülle WH von der Vorratseinheit 10 abgezogen wird. Dies ist in Fig. 1 dargestellt.

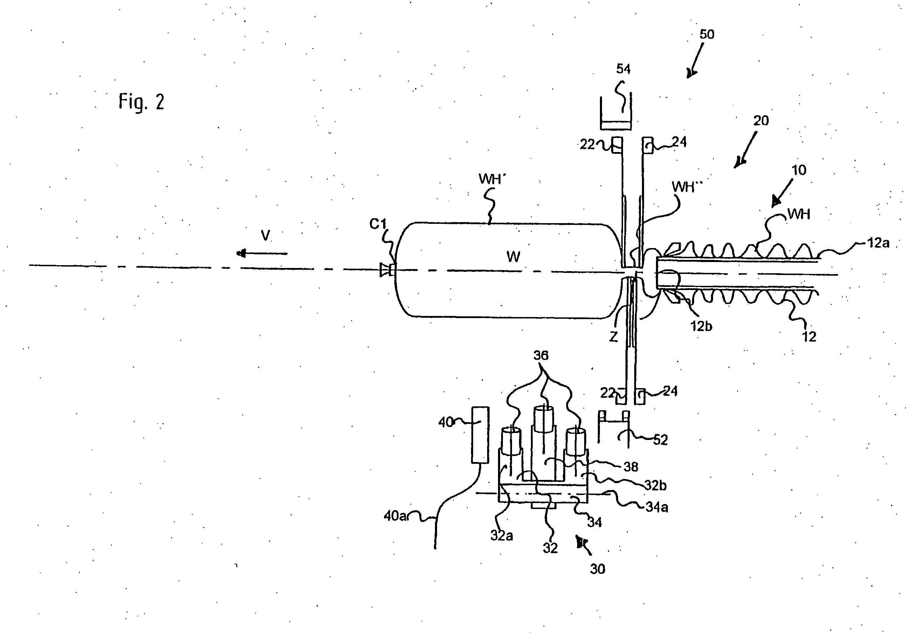

Nachdem die gewünschte Füllmenge in die Wursthülle WH eingefüllt und dabei ein mit Füllgut befüllter Wursthüllenabschnitt WH' des entstehenden Wurstprodukts W nach links entlang des Vorschubwegs V vorgeschoben worden ist, werden der erste Irisverdränger 22 sowie der zweite Irisverdränger 24 geschlossen, so dass sich an dem Wursthüllenmaterial WH deutlich der erste Wursthüllenabschnitt WH' ausbildet, der mit Füllgut befüllt ist, sowie ein zweiter Wursthüllenabschnitt WH", der leer ist, der sich zwischen den beiden Irisverdrängern 22, 24 erstreckt, der vorzugsweise im Vergleich zu dem ersten Wursthüllenabschnitt WH' kürzerer ist und der den ersten Teil des noch zu bildenden Zopfes Z bildet. Dieser Zustand ist in Fig. 2 wiedergegeben.

Daraufhin wird die erste Verdrängereinheit 22 nach links, d.h. also in Richtung des mittels des Clips C1 verschlossenen Endes der Wursthülle WH entlang des Vorschubweges V verfahren. Dabei wird leeres Wursthüllenmaterial WH aus der Vorratseinheit 10 bzw. von der Außenfläche 12a des Füllrohres 12 abgezogen. Da der zweite Irisverdränger 24 nicht vollständig verschlossen ist, lässt sich die leere Wursthülle WH durch diesen zweiten Irisverdränger 24 hindurchziehen. Hierdurch wird zwischen dem ersten Irisverdränger 22 und dem zweiten Irisverdränger 24 eine erste Länge des Zopfes Z entlang des Borschubweges Vgebildet. Dieser Zustand ist in Fig. 3 wiedergegeben.

Nach Passieren der Sensoreinrichtung 40 durch den ersten Irisverdränger 22 wird die zweite Zopfbildungseinheit 30 aus ihrer in den Fig. 1 bis 3 und 9 gezeigten Außerbetriebsstellung um die Drehachse 34a verschwenkt. Nach Abschluss der Schwenkbewegung gelangen die drei an der zweiten Zopfbildungseinheit 30 bzw. an dem ersten und dem zweiten Träger 32, 38 vorgesehenen Schlaufenbildungselemente 36 in Eingriff mit der ersten Länge des durch die erste Zopfbildungseinheit 22, 24 gebildeten Zopfs Z. Dabei befinden sich die beiden die Dreiecksbasis bildenden Schlaufenbildungselemente 36 der U-Schenkel 32a, 32b unterhalb des Zopfes Z, wogegen das obere Schlaufenbildungselement 36 des zweiten Trägers 38, welches die Dreieckspitze bildet, oberhalb des Zopfes Z angeordnet ist, wie dies aus den Fig. 4 und 10 entnehmbar ist.

Nach Abschluss der Zopfbildungsbewegung durch die erste Zopfbildungseinheit 22, 24 wird das mittlere Schlaufenbildungselement 36 des zweiten Trägers 38 mittels des nicht näher dargestellten Antriebs linear nach unten verfahren, wie es in Fig. 5 gezeigt ist. Dabei wird weiteres leeres Wursthüllenmaterial WH von der Vorratseinheit 10 abgezogen und gleichzeitig eine Schlaufe in dem Zopf Z gebildet, welche die zweite Länge des entstehenden Zopfes Z bildet.

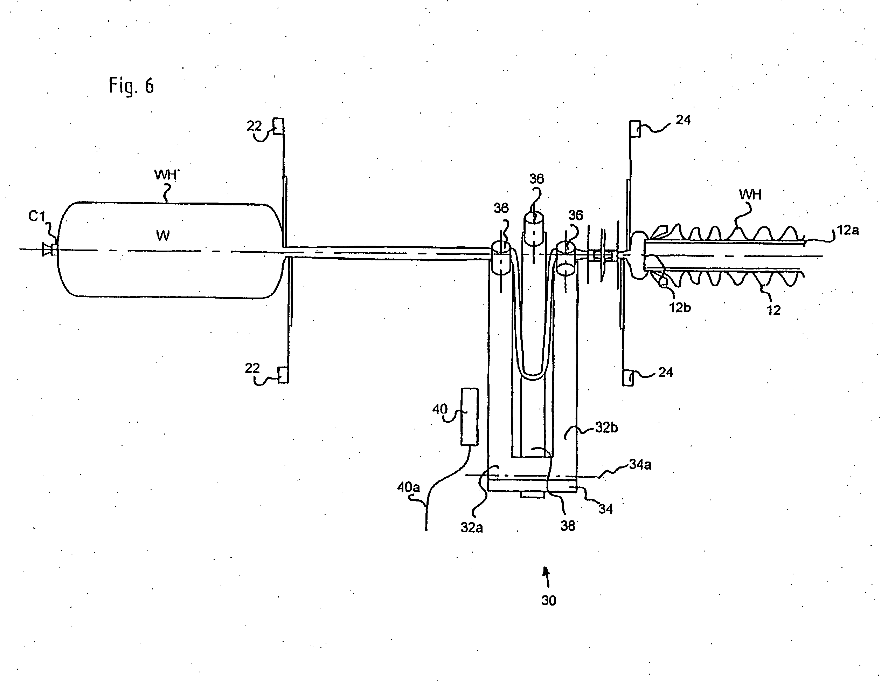

Nach Abschluss der Schlaufenbildung mittels des zweiten Trägers 38 wird durch die Clipsetzeinheit 50 ein zweiter und dritter Verschlussclips C2, C3 an dem leeren Wursthüllenmaterial WH gesetzt. Hierbei bildet der zweite Clips C2 den Abschluss des erzeugten Zopfes Z und damit des ebenfalls erzeugten Wurstproduktes W, wogegen der dritte Clips C3 den ersten Clips für das nachfolgende Wurstprodukt W bildet. Daraufhin wird mittels des Trennmessers 56 das Wursthüllenmaterial WH des so gebildeten Wurstprodukts W zwischen dem zweiten und dem dritten Clips C2, C3 von dem in der Vorratseinheit 10 befindlichen leeren Wursthüllenmaterial WH abgetrennt, wie es in Fig. 6 gezeigt ist. Gleichzeitig, kurz vorher oder kurz nachher, führt der zweite Träger 38 in seine Ausgangstellung in der Weise linear zurück, dass das Schlaufenbildungselement 36 des zweiten Träger 38außer Eingriff mit der Schlaufe bzw. dem Zopf Z gelangt, wie dies ebenfalls in Fig. 6 gezeigt ist.

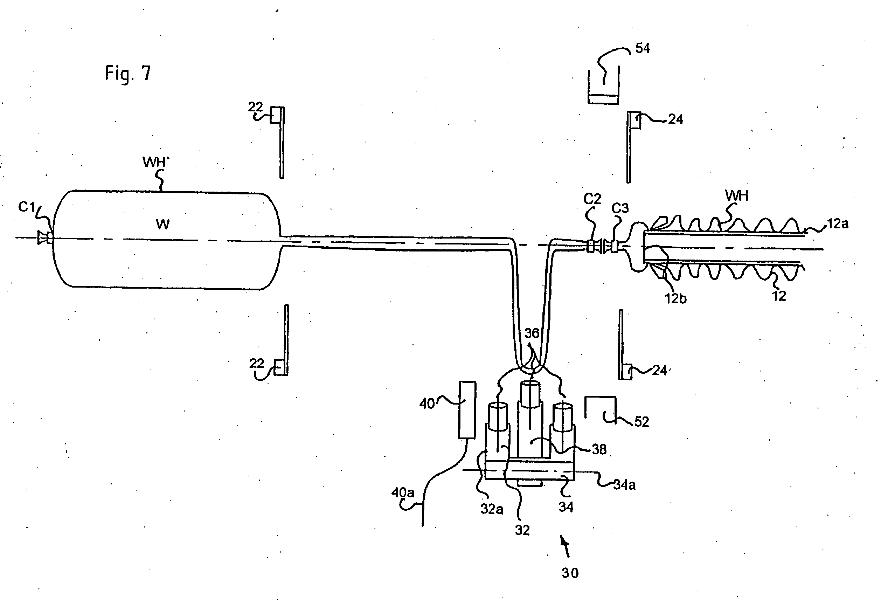

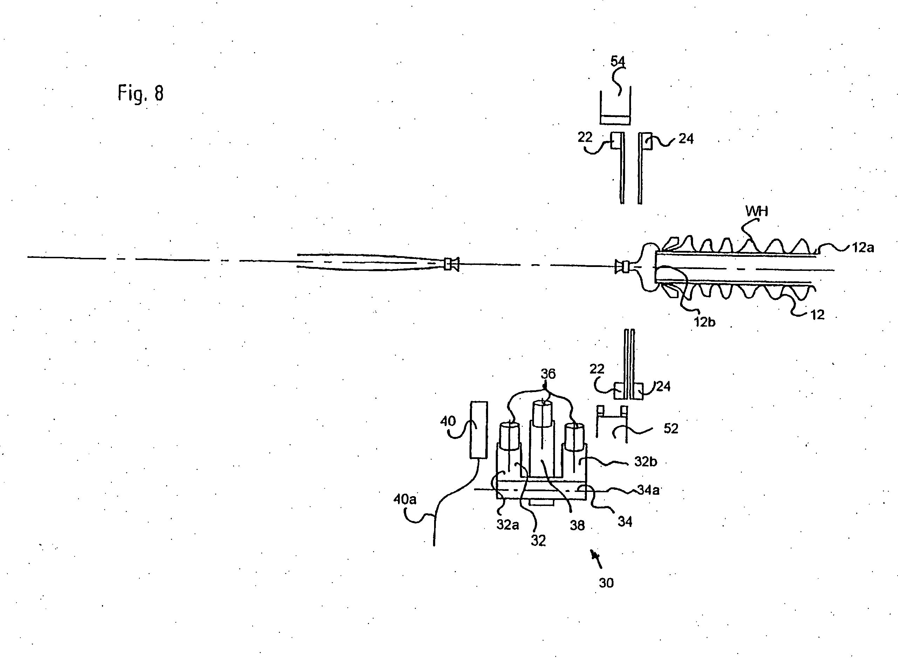

Daraufhin verschwenkt die zweite Zopfbildungseinheit 30 in ihrer Ausgangsstellung zurück und das gebildete Wurstprodukt W kann mit dem Zopf Z aus der erfindungsgemäßen Vorrichtung mittels des bereits vorstehend erwähnten, nicht dargestellten Förderbands ausgetragen werden, wie dies in den Fig. 7 und 8 gezeigt ist. Anschließend kann in der vorstehend beschriebenen Weise ein neues Wurstprodukt W mit einem Zopf Z hergestellt werden.

## Patentansprüche

1. Vorrichtung zum Ausbilden eines Zopfes an einem Verpackungshüllenmaterial, das ein Füllgut, insbesondere Wurstbrät, aufnimmt, wobei der Zopf (Z) wenigstens während seiner Ausbildung zumindest annähernd füllgutfrei ist, enthaltend: einen sich zumindest annähernd linear erstreckenden Vorschubweg (V) für das Verpackungshüllenmaterial (WH), entlang dem der Zopf (Z) ausgebildet wird, eine Vorratseinheit (10) zur Aufnahme eines Vorrats an leerem Verpackungshüllenmaterial und eine erste Zopfbildungseinheit (20), die in der Lage ist, in Richtung des Vorschubwegs (V) zur Bildung einer ersten Zopflänge durch Abziehen von Verpackungshüllenmaterial aus dem Vorrat auf das Verpackungshüllenmaterial (WH) einzuwirken,
**dadurch gekennzeichnet, dass** eine zweite Zopfbildungseinheit (30) vorgesehen ist, die in der Lage ist, durch Abziehen von weiterem Verpackungshüllenmaterial (WH) aus dem Vorrat eine zweite Zopflänge zu erzeugen.

2. Vorrichtung nach Anspruch 1,
**dadurch gekennzeichnet, dass** die zweite Zopfbildungseinheit (30) in der Lage ist, zum Erzeugen der zweiten Zopflänge quer zu dem Vorschubweg (V) des Verpackungshüllenmaterials (WH) auf dieses zur Ausbildung einer Zopfschlaufe einzuwirken.

3. Vorrichtung nach Anspruch 2,
**dadurch gekennzeichnet, dass** die zweite Zopfbildungseinheit (30) in der Lage ist, bei einer Zopfbildungsbewegung aus einer Bereitschaftsstellung in eine Zopfverlängerungsstellung reversibel linear verfahren zu werden.

4. Vorrichtung nach Anspruch 2,
**dadurch gekennzeichnet, dass** die zweite Zopfbildungseinheit (30) in der Lage ist, bei einer Zopfbildungsbewegung aus einer Bereitschaftsstellung in eine Zopfverlängerungsstellung reversibel verschwenkt zu werden.

5. Vorrichtung nach einem der Ansprüche 1 bis 4,
**dadurch gekennzeichnet, dass** die zweite Zopfbildungseinheit (30) mindestens einen Träger (32, 38) mit wenigstens einer Schlaufenbildungseinrichtung aufweist.

6. Vorrichtung nach Anspruch 5,
**dadurch gekennzeichnet, dass** die Schlaufenbildungseinrichtung mehrere Schlaufenbildungselemente (36) aufweist, die in der Lage sind, während der Zopfbildungsbewegung den Zopf (Z) zwischen sich aufzunehmen.

7. Vorrichtung nach einem der Ansprüche 1 bis 6,
**dadurch gekennzeichnet, dass** die erste Zopfbildungseinheit (20) durch eine Füllgut-Verdrängereinrichtung (22, 24) gebildet ist, die mindestens eine erste und eine zweite Verdrängereinheit (22, 24) aufweist, wobei vorzugsweise wenigstens die zweite Verdrängereinheit (24) zumindest annährend in Vorschubrichtung des Verpackungshüllenmaterials (WH) zur Ausbildung der ersten Zopflänge reversibel verfahrbar ist.

8. Verfahren zum Ausbilden eines Zopfes (Z) an einem Verpackungshüllenmaterial (WH), insbesondere zum Betrieb der Vorrichtung nach einem der Ansprüche 1 bis 7, wobei das Verpackungshüllenmaterial (WH) ein Füllgut, insbesondere Wurstbrät aufnimmt und wobei der Zopf (Z) wenigstens während seiner Ausbildung zumindest annährend füllgutfrei ist, enthaltend die folgenden Schritte: Vorschieben eines aus einem Vorrat an leerem Verpackungshüllenmaterial (WH) abgezogenen Verpackungshüllenmaterials (WH) entlang eines sich zumindest annährend linear erstreckenden Vorschubwegs (V) für das Verpackungshüllenmaterial (WH) und Ausbilden einer ersten Zopflänge mittels einer ersten Zopfbildungseinheit (20).
**dadurch gekennzeichnet, dass** eine zweite Zopflänge mittels einer zweiten Zopfbildungseinheit (30) gebildet wird.

9. Verfahren nach Anspruch 8,
**dadurch gekennzeichnet, dass** die Ausbildung der zweiten Zopflänge begonnen wird, bevor die Ausbildung der ersten Zopflänge abgeschlossen ist.

10. Verfahren nach Anspruch 8,
**dadurch gekennzeichnet, dass** die Ausbildung der zweiten Zopflänge nach Ausbildung der ersten Zopflänge begonnen wird.

11. Verfahren nach einem der Ansprüche 8 bis 10,
**dadurch gekennzeichnet, dass** zur Ausbildung der zweiten Zopflänge an dem durch die erste Zopfbildungseinheit (30) ausgebildeten ersten Zopflänge eine Zopfschlaufe gebildet wird.

## Claims

1. A device for forming a tail on a casing material which receives a filling, in particular sausage meat, the tail (Z) being at least approximately free of filling at least while it is formed, containing: a forward movement path (V) extending at least approximately linearly for the casing material (WH), along which the tail (Z) is formed, a storage unit (10) for holding a supply of empty casing material and a first tail-forming unit (20) which is capable of acting on the casing material (WH) in the direction of the forward movement path (V) to form a first tail length by drawing casing material from the supply,
**characterised in that** a second tail-forming unit (30) is provided which is capable of producing a second tail length by drawing off further casing material (WH) out of the supply.

2. A device according to Claim 1, **characterised in that** the second tail-forming unit (30), in order to produce the second tail length, is capable of acting on the casing material (WH) transversely to the forward movement path (V) of the latter to form a tail loop.

3. A device according to Claim 2, **characterised in that** the second tail-forming unit (30) is capable of being moved reversibly linearly from a ready position into a tail-lengthening position upon a tail-forming movement.

4. A device according to Claim 2, **characterised in that** the second tail-forming unit (30) is capable of being pivoted reversibly from a ready position into a tail-lengthening position upon a tail-forming movement.

5. A device according to one of Claims 1 to 4, **characterised in that** the second tail-forming unit (30) has at least one support (32, 38) with at least one loop-forming means.

6. A device according to Claim 5, **characterised in that** the loop-forming means has a plurality of loop-forming elements (36) which are capable of holding the tail (Z) between them during the tail-forming movement.

7. A device according to one of Claims 1 to 6, **characterised in that** the first tail-forming unit (20) is formed by a filling displacement means (22, 24) which has at least a first and a second displacement unit (22, 24), with preferably at least the second displacement unit (24) being at least approximately reversibly movable in the direction of advance of the casing material (WH) to form the first tail length.

8. A method for forming a tail (Z) on a casing material (WH), in particular for operating the device according to one of Claims 1 to 7, wherein the casing material (WH) receives a filling, in particular sausage meat, and wherein the tail (Z) being at least approximately free of filling at least while it is being formed, containing [sic] the following steps: advancing a casing material (WH) drawn off from a supply of empty casing material (WH) along a forward movement path (V) extending at least approximately linearly for the casing material (WH) and forming a first tail length by means of a first tail-forming unit (20),
**characterised in that** a second tail length is formed by means of a second tail-forming unit (30).

9. A method according to Claim 8, **characterised in that** the formation of the second tail length is begun before the formation of the first tail length has ended.

10. A method according to Claim 8, **characterised in that** the formation of the second tail length is begun once the first tail length has been formed.

11. A method according to one of Claims 8 to 10, **characterised in that** to form the second tail length a tail loop is formed on the first tail length formed by the first tail-forming unit (30).

## Revendications

1. Dispositif de formation d'une tresse sur une matière de boyau d'emballage qui reçoit un produit à embosser, notamment de la chair à saucisse, la tresse (Z) étant, au moins pendant sa formation, au moins à peu près sans produit à embosser, comprenant : un trajet (V) d'avance de la matière (WH) de boyau d'emballage, qui s'étend au moins à peu près linéairement et le long duquel est formée la tresse (Z), une unité (10) de réserve de réception d'une réserve de matière de boyau d'emballage vide et une première unité (20) de formation de tresse, qui est en mesure d'agir dans la direction du trajet (V) d'avance pour la formation d'une première longueur de tresse par retrait de matière de boyau d'emballage de la réserve en matière (WH) de boyau d'emballage,
**caractérisé en ce qu'**il est prévu une deuxième unité (30) de formation de tresse, qui est en mesure de produire une deuxième longueur de tresse par retrait de la réserve de matière (WH) supplémentaire de boyau d'emballage.

2. Dispositif suivant la revendication 1,
**caractérisé en ce que** la deuxième unité (30) de formation de tresse est en mesure, pour produire la deuxième longueur de tresse, d'agir sur la formation d'un noeud coulant de tresse transversalement au trajet (V) d'avance de la matière (WH) de boyau d'emballage sur celle-ci.

3. Dispositif suivant la revendication 2,
**caractérisé en ce que** la deuxième unité (30) de formation de tresse est en mesure, lors d'un mouvement de formation de tresse, d'être déplacée linéairement d'une manière réversible d'une position de préparation en une position d'allongement de tresse.

4. Dispositif suivant la revendication 2,
**caractérisé en ce que** la deuxième unité (30) de formation de tresse est en mesure, lors d'un mouvement de formation de tresse, d'être basculée réversiblement d'une position de préparation à une position d'allongement de tresse.

5. Dispositif suivant l'une des revendications 1 à 4,
**caractérisé en ce que** la deuxième unité (30) de formation de tresse a au moins un support (32, 38) ayant au moins un dispositif de formation de noeuds coulants.

6. Dispositif suivant la revendication 5,
**caractérisé en ce que** le dispositif de formation de noeuds coulants a plusieurs éléments (36) de formation de noeuds coulants, qui sont en mesure d'absorber entre eux la tresse (Z) pendant le mouvement de formation de tresse.

7. Dispositif suivant l'une des revendications 1 à 6,
**caractérisé en ce que** la première unité (20) de formation de tresse est formée par un dispositif (22, 24) d'embossage du produit à embosser, qui a au moins une première et une deuxième unité (22, 24) d'embossage, de préférence au moins la deuxième unité (24) d'embossage pouvant être déplacée réversiblement pour la formation de la première longueur de tresse, au moins à peu près dans la direction d'avance de la matière (WH) de boyau d'emballage.

8. Procédé de formation d'une tresse (Z) sur une matière (WH) de boyau d'emballage, notamment pour faire fonctionner le dispositif suivant l'une des revendications 1 à 7, dans lequel la matière (WH) de boyau d'emballage reçoit un produit à embosser, notamment de la chair à saucisse, et dans lequel la tresse (Z) est au moins à peu près sans produit à embosser au moins pendant sa formation, comprenant les stades suivants : avance d'une matière (WH) de boyau d'emballage retirée d'une réserve de matière (WH) de boyau d'emballage vide le long d'un trajet (V) d'avance de la matière (WH) de boyau d'emballage, qui s'étend au moins à peu près linéairement, et formation d'une première longueur de tresse au moyen d'une première unité (20) de formation de tresse,
**caractérisé en ce qu'**on forme une deuxième longueur de tresse au moyen d'une deuxième unité (30) de formation d'une tresse.

9. Procédé suivant la revendication 8,
**caractérisé en ce que** l'on commence la formation de la deuxième longueur de tresse avant que la formation de la première longueur de tresse soit terminée.

10. Procédé suivant la revendication 8,
**caractérisé en ce que** l'on commence la formation de la deuxième longueur de tresse après la formation de la première longueur de tresse.

11. Procédé suivant l'une des revendications 8 à 10,
**caractérisé en ce que**, pour former la deuxième longueur de tresse, on forme un noeud coulant de tresse sur la première longueur de tresse formée par la première unité (30 ) de formation de tresse.
